(19) **Europäisches Patentamt European Patent Office Office européen des brevets**

(11) **EP 4 296 847 B1**

(12) **EUROPEAN PATENT SPECIFICATION**

(45) Date of publication and mention of the grant of the patent:
**15.01.2025 Bulletin 2025/03**

(51) International Patent Classification (IPC):
**G06F 7/544** (2006.01)    **G06F 17/14** (2006.01)

(52) Cooperative Patent Classification (CPC):
**G06F 7/544; G06F 17/142**

(21) Application number: **23173461.7**

(22) Date of filing: **15.05.2023**

(54) **A SIGNAL PROCESSING SYSTEM FOR PERFORMING A FAST FOURIER TRANSFORM WITH ADAPTIVE BIT SHIFTING, AND METHODS FOR ADAPTIVE BIT SHIFTING**

SIGNALVERARBEITUNGSSYSTEM ZUR DURCHFÜHRUNG EINER SCHNELLEN FOURIER-TRANSFORMATION MIT ADAPTIVER BITVERSCHIEBUNG UND VERFAHREN ZUR ADAPTIVEN BITVERSCHIEBUNG

SYSTÈME DE TRAITEMENT DE SIGNAL POUR EFFECTUER UNE TRANSFORMÉE DE FOURIER RAPIDE AVEC DÉCALAGE DE BITS ADAPTATIF, ET PROCÉDÉS DE DÉCALAGE DE BITS ADAPTATIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.06.2022 IN 202221035854**

(43) Date of publication of application:
**27.12.2023 Bulletin 2023/52**

(73) Proprietor: **NXP B.V.**
**5656 AG Eindhoven (NL)**

(72) Inventors:
- **Tuschen, Christian**
  **5656 AG Eindhoven (NL)**
- **Brett, Maik**
  **5656 AG Eindhoven (NL)**
- **Singh, Prabhjot**
  **5656 AG Eindhoven (NL)**
- **Goel, Anshul**
  **5656 AG Eindhoven (NL)**
- **Agrawal, Pranshu**
  **5656 AG Eindhoven (NL)**

(74) Representative: **Schmütz, Christian Klaus Johannes**
**NXP Semiconductors Germany GmbH**
**Intellectual Property Group**
**Beiersdorfstr. 12**
**22529 Hamburg (DE)**

(56) References cited:
US-A- 6 081 821      US-A1- 2004 059 766
US-A1- 2007 266 070

**Description**

**BACKGROUND**

**FIELD OF THE DISCLOSURE**

This disclosure generally relates to a signal processing system, and more particularly to the signal processing system performing a Fast Fourier Transform (FFT) based on adaptive bit shifting of signed binary integers associated with computations of a radix kernel to transform data in a time domain to a frequency domain.

**DESCRIPTION OF THE RELATED ART**

A Fast Fourier Transform (FFT) is widely utilized in radar systems and communication systems. The FFT is a generic name for a class of efficient computations to implement a Discrete Fourier Transform (DFT) to map data from a time domain to a frequency domain. The FFT efficiently maps the data in the time domain to the frequency domain by dividing processing into multiple radix stages where each stage comprises one or more radix kernels to perform computations of the DFT. The radix kernels receive as few as two inputs, perform multiplications and additions on the inputs based on the computations of the DFT, and provide as few as two outputs. The outputs of a radix kernel of one stage are provided to a respective radix kernel of another stage until the data in the time domain is mapped to the frequency domain. US 6 081 821 A discloses an example of an FFT implementation.

**BRIEF DESCRIPTION OF THE DRAWINGS**

FIG. 1 illustrates an example signal processing system for performing a Fast Fourier Transform (FFT) based on an adaptive bit shifting to map data in a time domain to a frequency domain in accordance with an embodiment.

FIG. 2 illustrates an example implementation of a radix kernel with adaptive bit shifting of the FFT in accordance with an embodiment.

FIG. 3 illustrates an example implementation of the radix kernel in the form of a radix-2 kernel in accordance with an embodiment.

FIG. 4 illustrates a detailed example implementation of the radix kernel in the form of a radix-2 kernel in accordance with an embodiment.

FIG. 5 illustrates an example implementation of the radix kernel in the form of a radix-4 kernel in accordance with an embodiment.

FIG. 6 illustrates a detailed example implementation of the radix kernel in the form of a radix-4 kernel in accordance with an embodiment.

FIGs. 7A-7D illustrate example lookup tables which a controller of the signal processing system accesses to set an adaptive left bit shifter and adaptive right bit shifter of the radix kernel in accordance with an embodiment.

FIG. 8 illustrates an example operation of a plurality of radix stages to perform the FFT in accordance with an embodiment.

FIGs. 9A & 9B are flow charts of example functions associated with performing the FFT based on the radix kernel with adaptive bit shifting in accordance with an embodiment.

The drawings are for the purpose of illustrating example embodiments, but it is understood that the embodiments are not limited to the arrangements and instrumentality shown in the drawings.

**DETAILED DESCRIPTION OF EMBODIMENTS**

A Fast Fourier Transform (FFT) maps data in a time domain to a frequency domain based on computations of signed binary integers. A common way to improve resolution of the computations and efficiency is to perform the FFT using one or more radix kernels where a fixed shifting is applied to an input of the radix kernels and after an output of a butterfly of the radix kernels. In an example, the shifting of the input of the radix kernel is a fixed left shift of signed binary integers and the shifting after the output of the butterfly is a fixed right shift of signed binary integers. The left shifting makes lower bits of signed binary integers input to the butterfly and twiddle factor multiplier available for computations by the radix kernels and the right shifting shifts out least significant bits (LSBs) of signed binary integers resulting from the computations that are at a higher resolution than a resolution of the signed binary integers to be output by the radix kernel. The fixed shifting does not result in the computations being performed at an optimum resolution because the available resolution for a computation differs depending on a magnitude of the signed binary integers.

Embodiments disclosed herein describe an adaptive bit shifting of signed binary integers input to the radix kernel and after an output of the butterfly of the radix kernel based on a leading bits count of signed binary integers input to the radix kernel. The bit shifting improves resolution of computations performed by the butterfly and twiddle factor multiplier of the radix kernel. An adaptive left bit shifter is arranged prior to the twiddle factor multiplier and performs an adaptive left shift by N of signed binary integers received by the radix kernel. An adaptive right bit shifter is arranged after an output of the butterfly and performs an adaptive right shift by M of signed binary integers output by the butterfly. In examples, M and N are integers based on the leading bit count determined by a leading bit analyzer which analyzes the signed binary integers input to the radix kernel. The leading bit analyzer determines the leading bit count by identifying a signed binary integer of the signed binary integers input having a maximum absolute value, counting a number of contiguous most significant bits (MSBs) with a same value of the sign bit for the signed binary integer having a maximum absolute value, and subtracting one to arrive at the leading bit count. The shift N, M of the adaptive left bit shifter and adaptive right bit shifter of the radix kernel is set based on accessing a look up table which indicates the left shift and right shift for the leading bit count. The output of the radix kernel is then provided to another radix kernel in another stage of radix kernels to continue the FFT. In examples, the adaptive left bit shifter results in MSBs not needed to store the magnitude of the signed binary integer input to the radix kernel shifted out and corresponding 0 bit LSBs inserted for use in increasing resolution of computations by the radix kernel. Further, the adaptive right bit shifter may perform an adaptive right shift of the output of the butterfly to preserve a certain number of the LSBs associated with the computation performed by the radix kernel at a higher resolution and insertion of a 0 bit as an MSB of the signed binary integer for each right shift. Well-known instructions, protocols, structures, and techniques have not been shown in detail in order not to obfuscate the description.

Example Systems

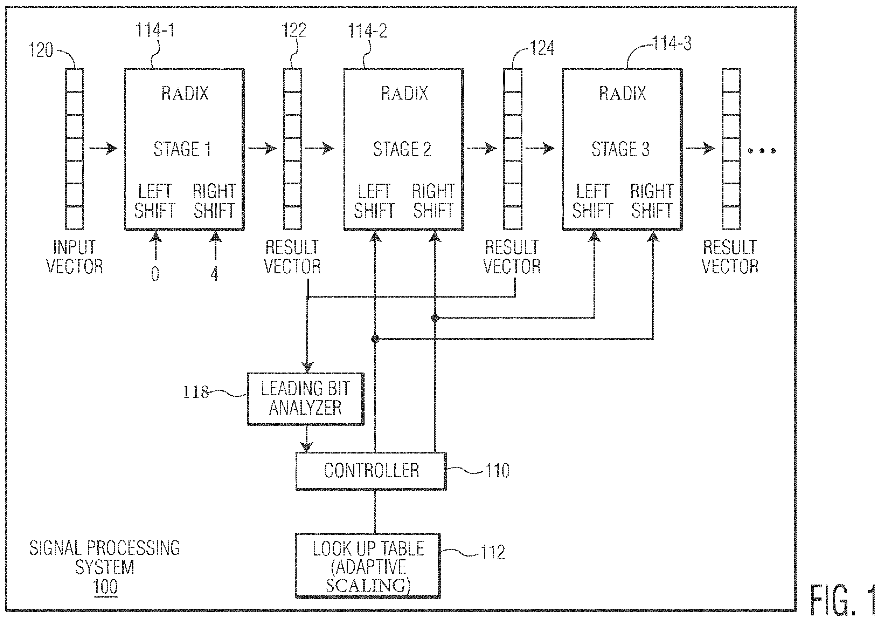

FIG. 1 is an example signal processing system 100 for performing a Fast Fourier Transform (FFT) based on an adaptive bit shifting to map data in a time domain to a frequency domain in accordance with an embodiment. The signal processing system 100 comprises one or more radix stages 114 to perform the FFT which in an example may be three or more radix stages shown as radix stages 114-1 to 114-3. The radix stages 114 may comprise one or more radix kernels as described below. Further, the signal processing system 100 may have a controller 110 which controls operation of the radix stage 114, a lookup table (LUT) 112 with adaptive scaling capability as described in more detail below, and a leading bit analyzer 118. Components of the signal processing system 100 may be each implemented using circuitry such as one or more of analog circuitry, mix signal circuitry, memory circuitry, logic circuitry, processing circuitry that executes code stored in a memory that when executed by the processing circuitry perform the disclosed functions, and combinations thereof.

The signal processing system 100 may be a component of another system such as a communication system or radar system (not shown) which receives data in a time domain and provides the data in the time domain to the signal processing system 100. The data may be samples of a signal received from a transmitter in the case of the communication system or reflected off an object in the case of the radar system. The signal processing system 100 may perform the FFT of the data to map the data from the time domain into the frequency domain.

The FFT may be an efficient implementation of a Discrete Fourier Transformation (DFT) which transforms data in the time domain into the frequency domain. The DFT is represented as:

$$X[k] = \sum_{n=0}^{N-1} x[n] e^{-j\frac{2\pi nk}{N}} \quad \text{for } 0 \le k \le N-1 \tag{1}$$

where X[k] is a DFT value for index k in the frequency domain, x[n] is an nth sample of data x in a time domain and L is the length of the data x. The DFT requires L complex multiplications and L*(L-1) complex additions to perform the transformation for an L-sample data in a time domain to the frequency domain.

To reduce the number of operations of the FFT, the signal processing system 100 may perform the FFT in one or more radix stages 114 to convert the data in the time domain to the frequency domain with fewer operations than the DFT. The FFT performed as the radix stages may begin with providing the data in the time domain to a first radix stage 114-1 as an input vector 120. The first radix stage 114-1 may then output a result vector 122 which is then input into a second radix stage 114-2. The second radix stage 114-2 may then process the result vector 122 and output a result vector 124 which is input to a third radix stage 114-3. This process may continue until the data is transformed from the time domain into the frequency domain.

In examples, the input vector and the result vector may comprise complex numbers with an imaginary and real component each represented by a signed binary integer with a bit width W. In an example, the signed binary integer may be a two's complement signed binary integer. The signed binary integer may have a most significant bit (MSB) which indicates whether binary integer is a positive or a negative number. For example, an MSB which is a 1 bit may indicate that the integer is negative and an MSB which is a 0 bit may indicate that the integer is positive. Further, this sign bit is replicated in the binary integer to lower significant bits (LSB) not used to represent an absolute magnitude of the binary integer.

Computations of the radix stage 114 may be performed in terms of the signed binary integers. A common way to improve resolution of the computations is to scale the signed binary integers by a fixed shift operation. In an example, the scaling may include a fixed left shift operation and a fixed right shift operation. The left shift operation may include shifting out an MSB of the signed binary integer and insertion of 0 bits as an LSB of the signed binary integer for each left shift making lower bits of the signed binary integer available to perform the computations of the radix stage 114 at a higher resolution. The shifting by a fixed right shift operation is a fixed right shift operation to shift out LSB at the higher resolution to form a signed binary integer with a resolution of the signed binary integer prior to the fixed left shift operation.

The fixed shifting does not result in the computations of the radix stage 114 being performed at an optimum resolution because available bits for a computation differ depending on a magnitude of the signed binary integer. The fixed right shift further results in loss of resolution associated with the computation of the radix stage 114.

Embodiments disclosed herein describe an adaptive left bit shift and adaptive right bit shift of signed binary integers based on a leading bits count of signed binary integers of a result vector input to the radix stage 114. The adaptive bit shifting may improve resolution of computations performed by the radix stage 114. The adaptive bit shifting may be an adaptive left shift of signed binary integers by N and an adaptive right shift by M of signed binary integers, where M and N are integers, based on the leading bit count. In an example, the leading bit analyzer 118 may receive a result vector 122 of the radix stage 114 which comprises signed binary integers. The leading bit analyzer 118 determines the leading bit count by identifying a signed binary integer of the signed binary integers input having a maximum absolute value, counting a number of contiguous MSBs with a same value of the sign bit for the signed binary integer having a maximum absolute value, and subtracting one to arrive at the leading bit count. For example, if the result vector includes 8 bit signed binary integer values, then a value of 15 with a 0 sign bit may include 3 leading bits and a value of -29 with a 1 sign bit may include two leading bits. The controller 110 may access the look up table 112 based on the leading bit count to determine the adaptive left shift and the adaptive right shift for the result vector which is then input into a radix stage 114 along with an indication of the adaptive left shift and adaptive right shift provided by the controller 110. In examples, the adaptive left shift results in MSBs not needed to store the magnitude of a signed binary integer in the result vector shifted out and corresponding 0 bit LSBs inserted for use in increasing resolution of computations by the radix stage 114. Further, the adaptive right shift of the output vector preserves a certain number of the LSBs associated with the computation performed by the radix stage 114 at a higher resolution and insertion of a 0 bit as an MSB of the signed binary integer for each right shift.

In an example, the first radix FFT stage 114-1 may receive an indication of a fixed left shift and a fixed right shift shown as 0 left shift and 4 right shift. Subsequent radix stages such as radix FFT stage 114-2 and radix FFT stage 114-3 may receive an indication of the adaptive left shift and adaptive right shift based on accessing the look up table 112. The radix FFT stage 114 which receives the indication of the adaptive left shift and adaptive right shift may depend on whether a leading bit count is available for the input vector or resultant vector input to the radix FFT stage 114. In the example, the leading bit count may not be known for the input vector but known for the resultant vector, such that radix stage 114-2 and radix stage 114-3 receive an indication of the adaptive left shift and adaptive right shift but not radix stage 114-1. Other variations are also possible.

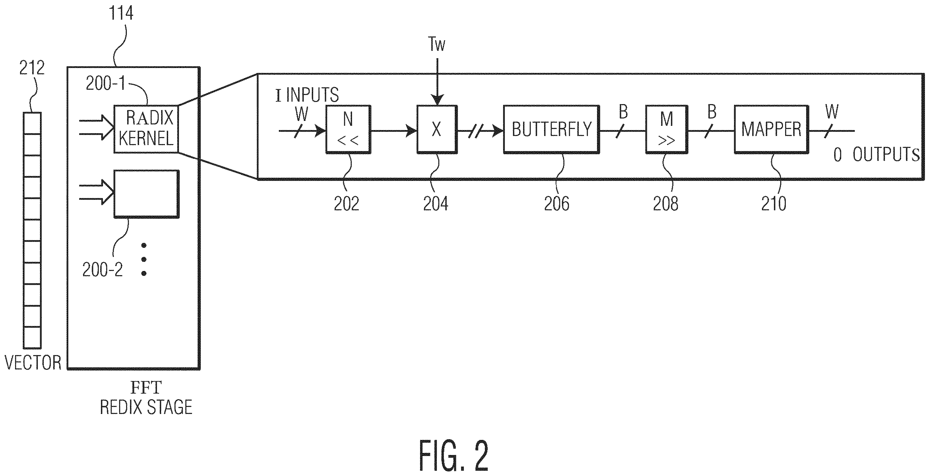

FIG. 2 illustrates an example radix kernel 200 arranged with adaptive bit shifting in accordance with an embodiment. The signal processing system 100 may have one or more radix stages 114 and one or more radix kernels 200 in a radix stage 114, shown as radix kernel 200-1 to 200-2 in an example. The radix kernel 200 of a radix stage 114 performs computations as described below to transform the data of the input vector 120 which is in the time domain into the frequency domain. A number of radix FFT stages 114 and a number of radix kernel 200 in a radix stage 114 to perform the FFT may depend on a number of complex numbers in a vector 120 (e.g., input vector or result vector) and a number of complex numbers received by each of the radix kernel 200 in each radix FFT stage 114.

In an example, the radix kernel 200 may have an adaptive left bit shifter 202, butterfly 206, a twiddle factor multiplier 204, an adaptive right bit shifter 208, and a mapper 210 to perform computation of the FFT. Components of the radix kernel 200 may be each implemented using circuitry such as one or more of analog circuitry, mix signal circuitry, memory circuitry, logic circuitry, processing circuitry that executes code stored in a memory that when executed by the processing circuitry perform the disclosed functions, and combinations thereof.

Each radix kernel 200 may receive a subset of the complex numbers of the input vector or result vector. The radix kernel 200 may be one of a radix-2 kernel (RDX2) and radix-4 (RDX4) kernel in an example. The radix-2 kernel consists of receiving two complex number inputs x0, x1 and performing two additions and two multiplications with a twiddle factor to produce two complex number output data y0, y1 in accordance with the equations y0=x0+t*x1 and y1=x0+t*x1 where "t" is referred to as a "twiddle factor." The multiplications may be performed by the twiddle factor multiplier 204 of the radix kernel 200 and the additions may be performed by the butterfly 206 of the radix kernel 200.

A L-sample FFT based on the radix-2 kernel consists of Log(L) stages of radix 2 kernel where an output of a radix-2 kernel of one radix stage is provided as an input of a radix-2 kernel of another radix stage and each radix stage consists of L/2 radix 2 kernels.

The radix-4 kernel is even more computationally efficient than the radix-2 kernel. The radix-4 kernel receives four complex number inputs and provides four complex number outputs. A L-sample FFT based on the radix-4 kernel requires fewer radix stages and fewer butterflies than using the radix-2 kernel. For example, to calculate a 16-point FFT, the radix-2 kernel takes $\log_2(16)$ or 4 stages, while the radix-4 kernel takes only $\log_2(16)$ or 2 radix stages.

In an example, the radix kernel 200 in the form of the radix-2 kernel may receive as input signed binary integers of the real and imaginary components of the two complex numbers. The radix kernel 200 in the form of the radix-4 kernel may receive as input signed binary integers of the real and imaginary components of four complex numbers. Similarly, the output of the radix-2 kernel may be signed binary integers of the real and imaginary components of the two complex numbers and the output of the radix-4 kernel may be signed binary integers of the real and imaginary components of the four complex numbers.

The adaptive left bit shifter 202 and an adaptive right bit shifter 208 may scale an input to the radix kernel 200 and output of the butterfly 206 to improve resolution of computations associated with the butterfly 206 and twiddle factor multiplier 204. The input shown as I comprises complex numbers and a component of a complex number input into the radix kernel 200 may be a signed binary integer with a bit width W. In an example, the shifting of the input is a left shift operation by the adaptive left bit shift 202 of the signed binary integers of the input to improve resolution of the computation of the butterfly 106 and twiddle factor multiplier 204. The left shift may comprise shifting out an MSB of the signed binary integer and insertion of 0 bits as an LSB of the signed binary integer for each left shift making lower bits of the signed binary integer available to perform the computations at a higher resolution. Computations by the radix kernel 200 may also be performed at a bit width B where B>W, but the output O of the radix kernel 200 may be bit width W. The shifting of the output of the butterfly 206 is a right shift operation by the adaptive right bit shifter 208 on the signed binary integers output by the butterfly 206 to shift LSBs out to preserving zero or more of the LSB at the higher resolution and insertion of a 0 bit as an MSB of the signed binary integer for each right shift. The range of right shifting may be based on a difference between the number of bits of the signed binary integer output by the butterfly B and the number of bits of the signed binary integer output by the radix kernel 200 W which is (B-W+1). The mapper 210 may then map the lower W bits of the B bit signed binary integers output of the butterfly to W bit signed binary integers which is output by the radix kernel 200 as output O of complex numbers having components of signed binary integers.

To illustrate, the radix kernel 200 may receive a 24 bit signed binary integer which is left shifted by four to form a 28 bit signed binary integer. The butterfly 106 may perform the butterfly based on the 28 bit signed binary integer. Then, the radix kernel 200 may perform a right shift. The right shift may shift out one LSB of the 28 bit signed binary integer for each right shift. A right shift of four may result in a 4 LSB being shifted out. The mapper 110 may then map the lower 24 bits of the 28 bit signed binary integers output of the butterfly to 24 bit signed binary integers which is output by the radix kernel 200. In an example, the right shift may be a rounded right shift where the LSB of the 24 bit signed binary integer is rounded up if the 4 bits which are shifted out is greater than a value of 7 and otherwise not rounded up.

In an example, the left shift by the adaptive left bit shifter 202 may be a multiplication N in an example by a power of 2 and the right shift by the adaptive right bit shifter 208 may be a division M by a power of two. The controller 110 may select the N and M based on a number of leading bits associated with signed binary integers of the input to the radix kernel 200. The left shift and right shift may be selected by the controller 110 accessing the look up table 112 which indicates the selected shift based on the number of leading bits. In an example, the N for the radix-4 kernel and the radix-2 kernel may be a power of 2 selected from 1, 2, 4, 8, and 16, M for the radix-2 kernel may be a power of 2 selected from 1, 2, 4, and 8, and M for the radix-4 kernel may be a power of 2 selected from 1, 2, 4, 8, 16.

In an example, the controller 110 may receive an instruction from higher level processing of the communication system to cause the radix kernel 200 to configure the adaptive left bit shifter 202 and the adaptive right bit shifter 208. The instruction may indicate that the controller 110 is to set the adaptive left bit shifter 202 and the adaptive right bit shifter 208 with a shift value indicated by the look up table 112 and the number of leading bits of the signed binary integers input to the radix kernel 200, in which the case the shifting is adaptive for the input and output of the radix kernel 200. In some examples, the instruction may indicate whether only the adaptive right bit shifter 208 or both of the adaptive left bit shifter 202 or adaptive right bit shifter 208 may be adaptively set. A bit in the instruction may indicate whether or not the shifting is adaptive for both the adaptive left bit shifter 202 and adaptive right bit shifter 208 or only adaptive for the adaptive right bit shifter 108. Other combinations of adaptive bit shifting are also possible.

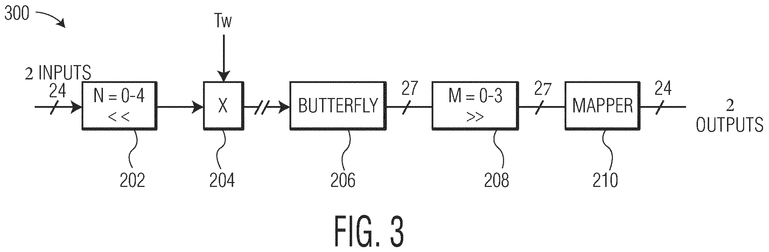

FIG. 3 illustrates an example implementation of a radix kernel 200 in the form of radix-2 kernel 300 in accordance with an embodiment. The radix-2 kernel 300 may receive two complex number represented by 24 bit signed binary integers as input. The adaptive left bit shifter 202 may shift each of the 24 bit signed binary integers by a left shift which varies from $N=0$ to 4. In an example, processing of the radix-2 kernel may include computations of the twiddle factor multiplier 204 and the butterfly 206 at a higher resolution than 24 bits and an output of the butterfly 206 may be two 27 bit signed binary integers based on the butterfly performing computations at the increased resolution. The adaptive right bit shifter 208 may shift the 27 bits of each signed binary integers which are received by a right shift which varies from $M=0$ to 3 so that zero or more LSBs of the 27 bits after the right shift is LSBs of the 24 bit signed binary integers of the two complex numbers output by the radix-2 kernel 300 by the mapper 210. The left shift and right shift may be determined based on the leading bit count of the signed binary integers input to the radix-2 kernel 300 and indicated by the look up table 112 to improve resolution of the computations of the radix-2 kernel 300.

To illustrate operation of the radix-2 kernel 300, the adaptive left bit shifter 202 may receive two complex numbers of signed binary integers of 24 bits. The two signed binary integers may have a minimum of 7 leading bits in the example and the adaptive left bit shifter 202 may shift the 24 bits of the input by a left shift which in this example is $N=3$ bits to produce signed binary integers of 24 bits with 3 bits shifted in as LSBs set to zero to increase resolution of computations with the 24 bit signed binary integers. The computations of the twiddle factor multiplier 204 and the butterfly 206 may be performed at a higher resolution than 24 bits which results in the butterfly 206 outputting signed binary integers of 27 bits in this example. The adaptive right bit shifter 204 may shift each of the signed binary integers of 27 bits by a right shift which in this example is $M=0$ bits. The 3 LSBs of the 27 bit signed binary integers is preserved. The 27 bit signed binary integers are then mapped to signed binary integers of 24 bits by the mapper 210 and the radix-2 kernel 300 may output two complex numbers. The shifting may increase resolution of the computations of the radix-2 kernel 300 by 6 bits, where 3 bits of resolution are added by each of the left shift and right shift in this example.

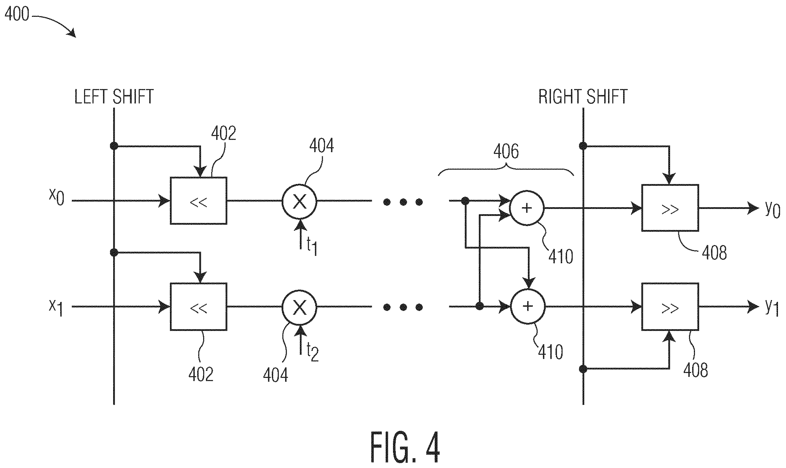

FIG. 4 illustrates a detailed example implementation of the radix kernel 200 in the form of the radix-2 kernel 400 in accordance with an embodiment. The radix-2 kernel 400 processes two inputs x0, x1 and provides two outputs y0, y1. Further, to process a vector of length $L=2'$, $L/2$ radix kernels may be needed per radix stage. The radix-2 kernel 400 may include adaptive left bit shifters 402, multipliers 404, a butterfly 406, and adaptive right bit shifters 408. The input may be complex numbers. Further, the adaptive left bit shifters 402 may receive an indication of a left shift from the controller 110 and perform a left shift of components of the complex number input which is then provided to the multipliers 404 which perform a complex multiplication with a twiddle factor $t_n$ (where n is an integer) also input to the multipliers 404. The output of the multipliers 404 is provided to the butterfly 406 which comprises summers 410 which performs a complex addition. An output of the butterfly 406 is input to adaptive right bit shifters 408 which also receives an indication of a right shift from the controller 110 and performs a right shift of the output of the butterfly 406. The signed binary integers output by the adaptive right bit shifter 408 may be mapped to a signed binary integer with a bitwidth W and two complex numbers output by the radix-2 kernel 400.

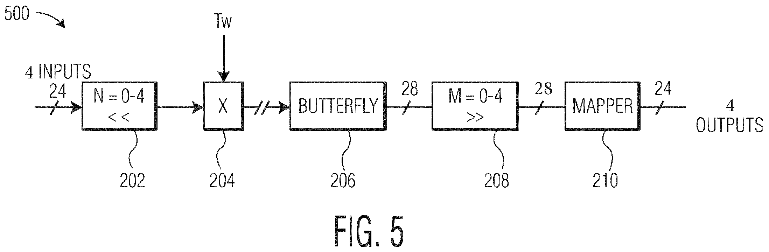

FIG. 5 illustrates an example implementation of a radix kernel 200 in the form of radix-4 kernel 400 in accordance with an embodiment. The radix-4 kernel may receive four complex numbers represented by 24 bit signed binary integers as input. An adaptive left bit shifter 202 may shift each of the 24 bit signed binary integers by a left shift which varies from $N=0$ to 4. In an example, processing of the radix-4 kernel 400 may include computations of the twiddle factor multiplier 204 and the butterfly 206 at a higher resolution than 24 bits and an output of the butterfly 206 may be 28 bit signed binary integers based on the butterfly performing computations at the increased resolution. An adaptive right bit shifter 208 may shift the 28 bits of each signed binary integers which are received by a right shift which varies from $M=0$ to 4 so that zero or more LSBs of the 28 bits after the right shift is LSBs of the 24 bit signed binary integers of the four complex numbers output by the radix-4 kernel 400 by the mapper 210. The left shift and right shift may be determined based on the leading bit count of the signed binary integers input to the radix-4 kernel 500 and indicated by the look up table 112 to improve resolution of the computations of the radix-4 kernel 500.

To illustrate operation of the radix-4 kernel 500, the adaptive left bit shifter 202 may receive four complex numbers of signed binary integers of 24 bits. The signed binary integers may have a minimum of 7 leading bits in the example and the adaptive left bit shifter 202 may shift the 24 bits of the input by a left shift which in this example is $M=3$ bits to produce signed binary integers of 24 bits with 3 bits shifted in as LSBs set to zero to increase resolution of computations with the 24 bit signed binary integers. The computations of the twiddle factor multiplier 204 and the butterfly 206 may be performed at a higher resolution than 24 bits which results in the butterfly 206 outputting signed binary integers of 28 bits in this example. The adaptive right bit shifter 204 may shift each of the signed binary integers of 28 bits by a right shift which in this example is $N=0$ bits to produce signed binary integers of 28 bit. The 4 LSBs of the 28 bit signed binary integers is preserved. The 28 bit signed binary integers is then mapped to signed binary integers of 24 bits by the mapper 210 and the radix-4 kernel 500 may output four complex numbers. The shifting may increase resolution of the computations of the radix kernel 500 by 7 bits, where 3 bits of resolution is added by the left shift and four bits of resolution is added by the right shift in this example.

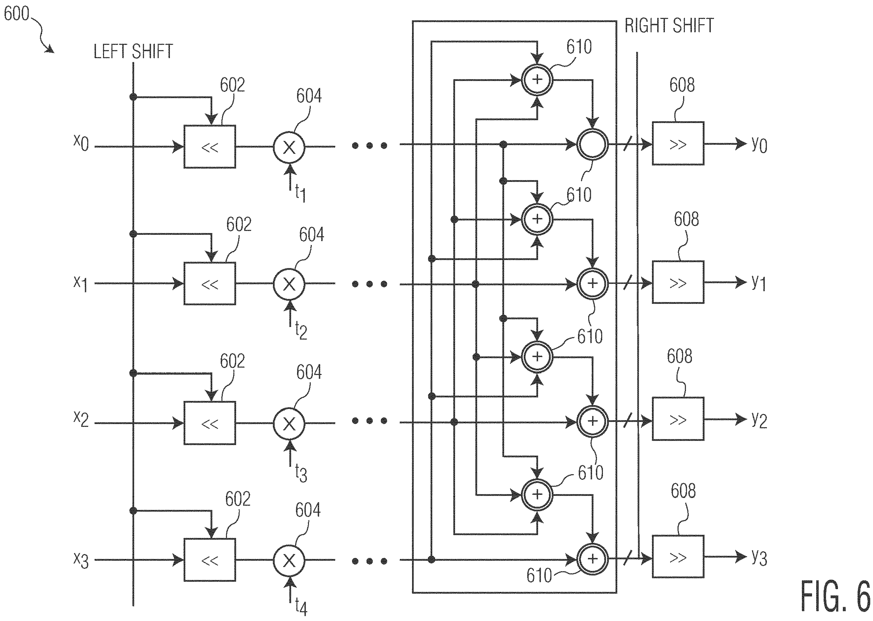

FIG. 6 illustrates a detailed example implementation of the radix kernel 200 in the form of a radix-4 kernel 600 in accordance with an embodiment. The radix-4 kernel 600 processes four inputs x0, x1, x2, x3 and provides four outputs y0, y1, y2, and y3. Further, to process a vector of length $L=2^n$, $L/4$ radix kernels may be needed per radix stage. The radix-4 kernel 600 may include adaptive left bit shifters 602, multipliers 604, a butterfly 606, and adaptive right bit shifters 608. The input may be complex numbers. Further, the adaptive left bit shifters 602 may receive an indication of a left shift from the controller 110 and perform a left shift of components of the complex number input which is then provided to the multipliers 604 which perform a complex multiplication with a twiddle factor $t_n$ (where n is an integer) also input to the multipliers 604. The output of the multipliers 604 is provided to the butterfly 606 which comprises summers 610 which performs a complex addition. An output of the butterfly 606 is input to adaptive right bit shifters 608 which also receives an indication of a right shift from the controller 110 and performs a right shift of the output of the butterfly 606. The signed binary integers output by the adaptive right bit shifter 608 may be mapped to a bitwidth W and four complex numbers output by the radix-4 kernel 600.

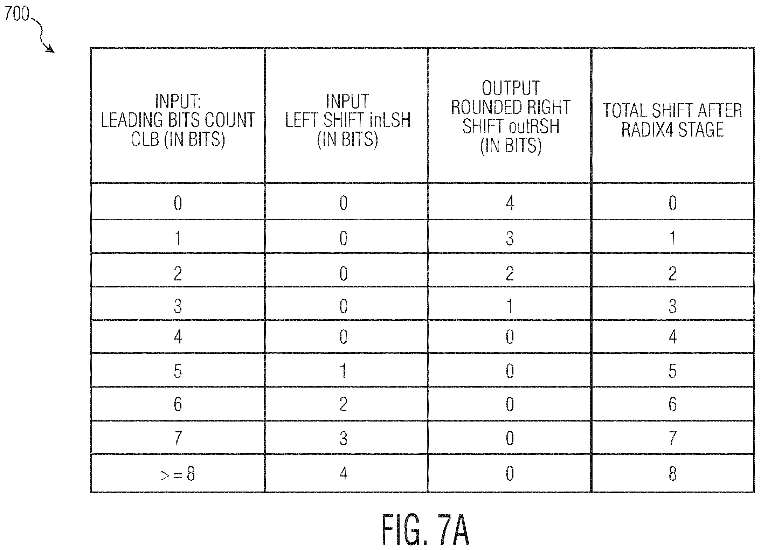

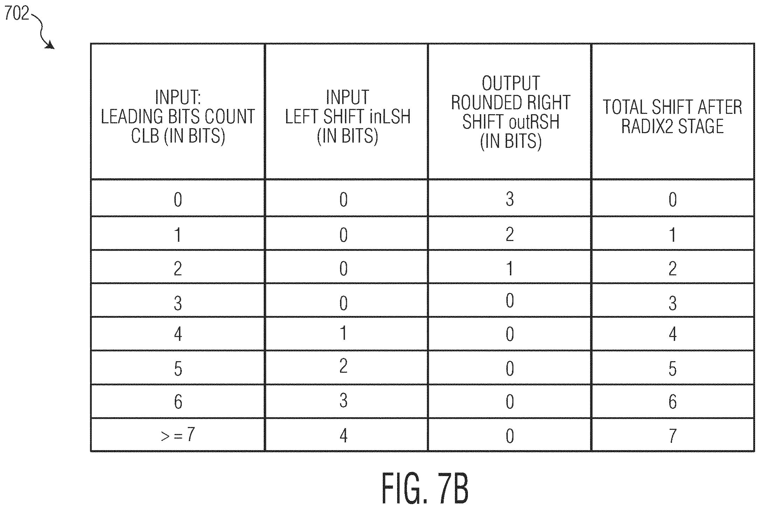

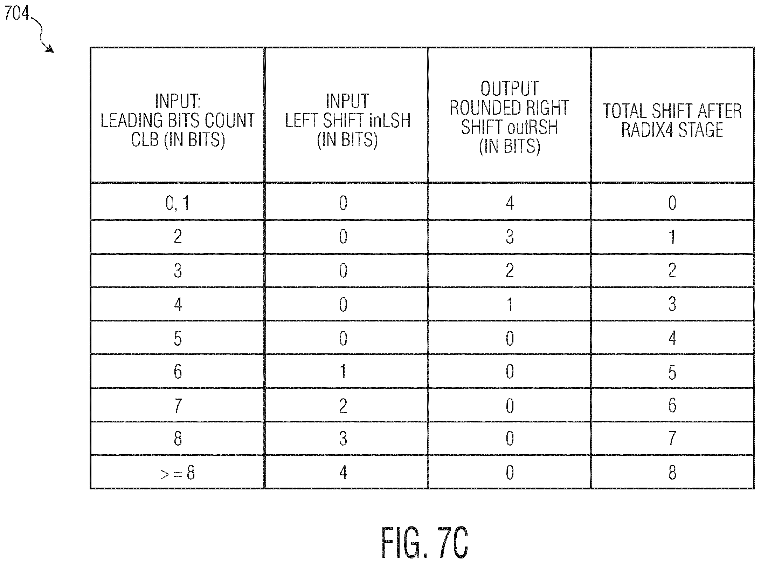

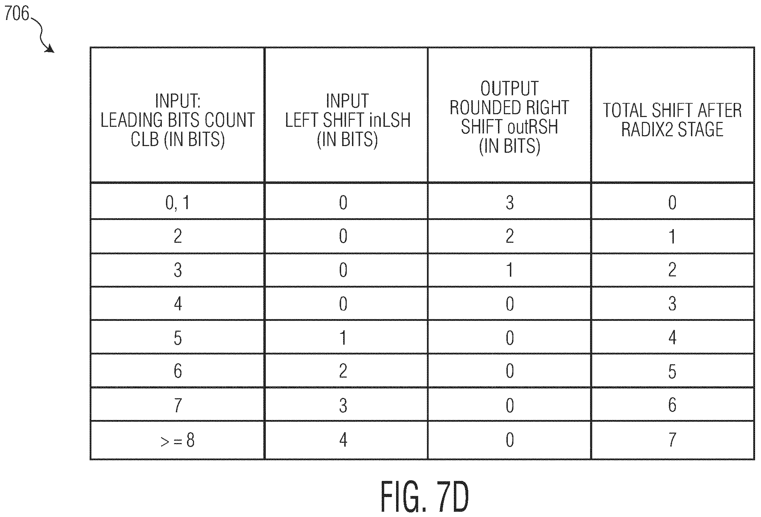

FIGs. 7A-7D illustrates example lookup tables 700-706 which the controller 110 accesses to set the adaptive left bit shifter 202 and adaptive right bit shifter 208 for the radix kernel 200 in accordance with an embodiment. In an example, the lookup table 112 may be stored in a memory of the signal processing system 100.

Table 700 may be used to select a left shift of the adaptive left bit shifter 202 of the radix-4 kernel 500 and a right shift of the adaptive right bit shifter 208 of the radix-4 kernel 500. The table 700 may indicate left shift (inLSH) and right shift (outRSH) based on a leading bit count (CLB) associated with an output of a previous stage which is an input to the radix-4 kernel 500. For example, the table 700 may indicate that if the input to the radix-4 kernel 300 has 6 leading bits, then the left shift of the adaptive left bit shifter 302 may be set to N=2 and the right shift of the adaptive right bit shifter 308 may be set to M=0. The left shift of 2 may increase resolution of computations by the radix-4 kernel 300 by two bit and the right shift of zero may increase resolution by 4 bits because the LSBs of the 28 bits when mapped to the 24 bits is preserved. The table 700 may further indicate that as a result of the shifting the resolution of the radix-4 kernel 300 is improved by +6 bits. In another example, the table 700 may indicate that the input to the radix-4 kernel 200 has 2 leading bits and the left shift for the adaptive left bit shifter 302 may be set to N=0 and the right shift of the adaptive right bit shifter 308 may be set to M=2. The left shift of 0 may not increase resolution because any increase in resolution may result in saturation of the computation in the radix-4 kernel 300 in this example. The right shift of 2 may result in an increase in resolution of +2 bits after the LSB of the 28 bits is mapped to a 24 bit signed binary integer. The table 700 may further indicate that as a result of the shifting the output improves resolution by +2 bits.

Table 702 may be used to select a left shift of the adaptive left bit shifter 202 of the radix-2 kernel 500 and a right shift of the adaptive right bit shifter 208 of the radix-2 kernel 500. The table 702 may indicate left shift and right shift based on a leading bit count associated with an output of a previous stage which is the input to the radix-2 kernel 500. For example, the table 702 may indicate that if the input to the radix-2 kernel 500 has 6 leading bits, then the left shift of the adaptive left bit shifter 202 may be set to N=3 and the right shift of the adaptive right bit shifter 208 may be set to M=0. The left shift of 3 may increase resolution of computations by the radix-2 kernel 500 by three bit and the right shift of zero may increase resolution by 3 bits because the LSBs of the 27 bits when mapped to the 24 bits is preserved. The table 702 may further indicate that as a result of the shifting the resolution of the radix-2 kernel 500 is improved by +6 bits. In another example, the table 702 may indicate that the input to the radix-2 kernel 500 has 2 leading bits and the left shift for the adaptive left bit shifter 302 may be set to N=0 and the right shift of the adaptive right bit shifter 308 may be set to M=1. The left shift of 0 may not increase resolution. The right shift of 1 may result in an increase in resolution of +2 bits after the LSB of the 27 bits is mapped to a 24 bit signed binary integer. The table 702 may further indicate that as a result of the shifting the output improves resolution by +2 bit.

In examples, the look up table 112 may take other forms. For example, the input left shift or output right shift may be greater than four for a leading bit count. Further, the look up table 112 may have a same left shift and right shift for zero and one leading bit count as shown in table 704 for a radix-4 kernel 500 and table 706 for a radix-2 kernel 300 to avoid a magnitude of a complex number after left and right shifting exceeding 1.0. A shift of signed binary integers of the real and imaginary components of a complex number to full resolution (24 bit signed integer needed to represent the magnitude) may lead to a maximum magnitude of 1.0 for each component of a complex number after radix kernel processing which results in a magnitude of the complex number exceeding a unit circle. To avoid this, additional resolution of the signed binary integers with B bit width is not preserved unless two or more leading bits are available in the signed binary integer. The signed binary integer of the real and imaginary components of a complex number are shifted so that the magnitude for each component of the complex number after the radix kernel processing will have a maximum magnitude of the complex number of 0.5 (23 bit signed integer needed to represent the magnitude). Other variations are also possible.

Example Methods

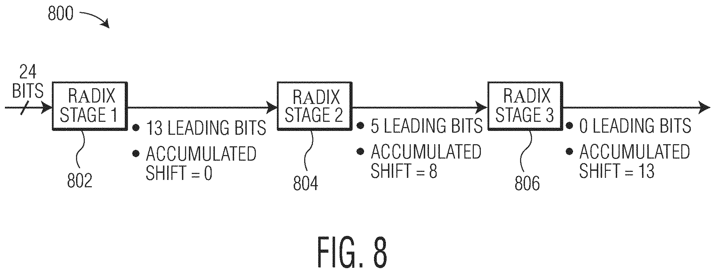

FIG. 8 illustrates an example operation 800 of a plurality of radix stages 802-806 to perform the FFT in accordance with an embodiment. In this example, the radix kernel 200 in each stage may be a radix-4 kernel 500 and an output of one radix stage may be an input to another radix stage.

The input which is provided to the radix stage 802 may be complex numbers defined by 24 bit signed binary integers. In this example, the 24 bits may represent an input value of range of - 512 to 511 stored as 10 bits of the 24 bits which means that the most significant 13 bits of the 24 bits are not used to represent the input value. In the first radix stage 802, no input shifting may be performed on the input and a fixed right shift of four may be applied to the output of the butterfly 206. Each of the 28 bit signed binary integers output by the butterfly 206 of the radix-4 kernel 500 may be mapped to 24 bits. If the output of the butterfly 206 is signed binary integers in the range of -512 to 511, then the 24 bit signed binary integers output may have 13 leading bits.

The radix stage 804 may receive the signed binary integers output from the first radix stage 802. In the radix stage 804, the adaptive left bit shifting and adaptive right bit shifting may be based on the leading bits count of the 24 bit signed binary integers output from the first stage 802 which is now input to the radix stage 804. In this example, the output of the 24 bit signed binary integers from the radix stage 802 which is input to the radix stage 804 may have 13 leading bits. An example look-up table may indicate a left shift of 4 for the adaptive left bit shifter 202 and a right shift of 0 for the adaptive right bit shifter 208 which results in an increase of resolution of 8 of the 24 bit signed binary integers output by the radix stage 804 for a total increase of resolution of 8 of the FFT. Further, in an example, the 24 bit signed binary integers output may have values ranging from -131,072 to 131,071 represented by 18 bits. The 24 bit signed binary integers output may have 5 leading bits.

The radix stage 806 may receive the 24 bit signed binary integers output from the second radix stage 704. In the radix stage 806, the adaptive left bit shifting and adaptive right bit shifting may be based on the number of leading bits in the 24 bit signed binary integers output from the second radix stage 704. In this example, the 24 bit signed binary integers output from the second radix stage 704 which is input to the third radix stage 806 may have 5 leading bits. The example look-up table may indicate a left shift of 1 for the adaptive left bit shifter 202 and a right shift of 0 for the adaptive right bit shifter 208 which results in an increase of resolution of 5 of the 24 bit signed binary integers output by the radix stage 806 to a total increase in resolution of 13 of the FFT. Further, in an example, the 24 bit signed binary integers output may have values ranging from -4,194,304 to 4,194,303 represented by 23 bits. The 24 bit signed binary integers output may have 0 leading bit. This process may be repeated for additional stages until the FFT is completed.

In an example, a total accumulation of resolution determined by the radix stages may be used to process the frequency domain representation of the input provided to the signal processing system 100. The total accumulation may be an indication of scaling of the frequency domain representation and is accounted for subsequent processing of the frequency domain representation.

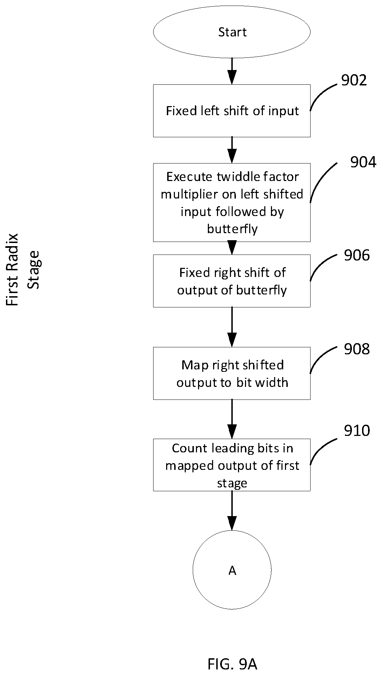

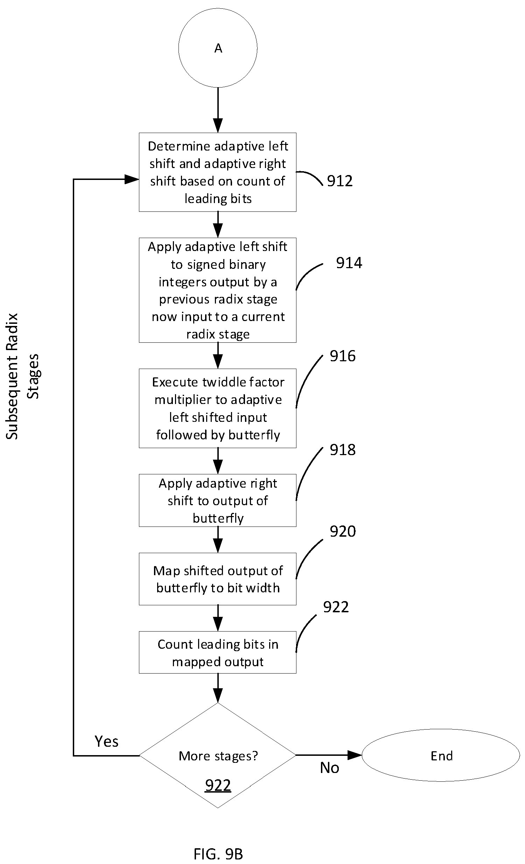

FIGs. 9A & 9B are flow charts of example functions associated with performing the FFT based on the radix kernel 200 with adaptive bit shifting in accordance with an embodiment. In a radix kernel 200 of first radix stage, a fixed left shift may be applied to signed binary integers with a bit width of 24 bits input to the radix kernel 200 at 902 in FIG. 9A. At 904, a butterfly 206 and a twiddle factor multiplier 204 is executed based on the fixed left shifted input. At 906, a fixed right shift is applied to signed binary integers of an output of the butterfly 206. The output of the butterfly 206 may be signed binary integers with a bit width greater than the bit width of the input to the radix kernel 200 such as 24 bits. At 908, signed binary integers of the fixed right shifted output is mapped to signed binary integers with the bit width smaller than the output of the butterfly of the first stage such as 24 bits which is output by the radix kernel 200. At 910, a number of leading bits in the signed binary integers of the output of the first radix stage is counted. The number of leading bits may be for a signed binary integer with maximum absolute magnitude of the output of the first radix stage.

The output of the radix kernel 200 which is signed binary integers may be provided to a second radix stage as an input to the second radix stage. Referring to FIG. 9B, at 912, an adaptive left shift and an adaptive right shift is determined from the look up table 112 based on the leading bit count associated with the output of the first stage which is now input to the second radix stage. At 914, the adaptive left shift is applied to the signed binary integers output by a previous radix stage now input to a current radix stage. If the previous radix stage is the first stage, then current radix stage is the second radix stage which receives the output of the first stage. At 916, the butterfly 106 and twiddle factor multiplier 104 is executed on the adaptive left shifted input. At 918, the adaptive right shift indicated by the look up table 112 is applied to signed binary integers of the output of the butterfly 106 of the second stage. At 920, the shifted output of the butterfly is mapped to signed binary integers with the bit width smaller than the output of the butterfly of the second stage such as 24 bits which is output by the radix kernel 200. At 922, a number of leading bits in the signed binary integers of the output of the second radix stage is counted. The number of leading bits may be for a signed binary integer with maximum absolute magnitude of the output of the second radix stage. Processing then returns to perform the radix kernel 200 in a subsequent radix stage if additional stages are to be processed until the FFT of the input to the first radix stage is completed.

In some examples, the leading bit count of the input to the first radix kernel in a first stage may be counted. In this case, an adaptive left shift and adaptive right shift may be determined and applied to the input and output of the butterfly rather than applying a fixed left shift and fixed right shift in the first radix stage.

In one embodiment, a method is disclosed for performing a Fast Fourier Transformation (FFT). The method comprises: receiving a first input at a first radix kernel of the FFT comprising signed binary integers, the signed binary integers of the first input each representing a component of a complex number associated with a time domain signal and having a bit width; applying a fixed left shift to the signed binary integers of the first input; performing a first radix kernel operation on the shifted first input at a higher bit resolution than the bit width; applying a fixed right shift to signed binary integers of an output of a butterfly of the first radix kernel operation which are mapped to the bit width to provide a first output of the first stage of the FFT; determining a leading bit count of signed binary integers in the first output; receiving the first output at a second radix kernel of the FFT which is a second input to the second radix kernel; applying an adaptive left shift to signed binary integers of the second input based on the leading bit count; performing a second radix kernel operation on the shifted second input at the bit resolution higher than the bit width; and applying an adaptive right shift based on the leading bit count to signed binary integers of an output of a butterfly of the second radix kernel operation which is mapped to the bit width to provide a second output of the second stage of the FFT; wherein the adaptive left shift and adaptive right shift determines a resolution of the FFT. In an example, the method further comprises providing an output of one radix kernel to an input of another radix kernel until the first input is transformed into the frequency domain. In an example, determining the leading bit count in the first output comprises counting a contiguous number of most significant bits which is the same as the sign bit in a signed binary integer of the first output which has a maximum absolute magnitude. In an example, the signed binary integers of the first output and the second output have the bit width. In an example, the first output and the second output comprise complex numbers each having components of signed binary integers. In an example, the first input, first output, and second output each comprises two complex numbers and the radix kernel is a radix-2 kernel. In an example, the first input, first output, and second output each comprises four complex numbers and the radix kernel is a radix-4 kernel. In an example, a number of the adaptive left shift is less than or equal to the leading bit count. In an example, a number of the adaptive right shift is less than or equal to a difference between the bit resolution higher than the bit width and the bit width. In an example, applying the adaptive right shift comprises accessing a lookup table which indicates a number of right shift based on the leading bit count applied to a signed binary integer of the output of the first radix kernel operation. In an example, applying the adaptive left shift comprises accessing the lookup table which indicates a number of left shift based on the leading bit count applied to a signed binary integer of the output of the first radix kernel operation.

In another embodiment, a signal processing system for performing a Fast Fourier Transformation (FFT) is disclosed. The system comprises: a first stage of the FFT which has a first radix kernel arranged to receive a first input comprising signed binary integers, the signed binary integers of the first input each representing a component of a complex number associated with a time domain signal and having a bit width; apply a fixed left shift to the signed binary integers of the first input; performing a first radix kernel operation on the shifted first input at a bit resolution higher than the bit width; apply a fixed right shift to signed binary integers of an output of a butterfly of the first radix kernel operation which is mapped to the bit width to provide a first output of the first stage of the FFT; and determine a leading bit count of signed binary integers in the first output; a second stage of the FFT which has a second radix kernel arranged to receive the first output which is a second input to the second radix kernel; apply an adaptive left shift to signed binary integers of the second input based on the leading bit count; perform a second radix kernel operation on the shifted second input at the bit resolution higher than the bit width; and apply an adaptive right shift based on the leading bit count to signed binary integers of an output of a butterfly of the second radix kernel operation which is mapped to the bit width to provide a second output of the second stage of the FFT; wherein the adaptive left shift and adaptive right shift determines a resolution of the FFT. In an example, the first radix kernel operation and the second radix kernel operation comprise a Discrete Fourier Transform (DFT). In an example, the butterfly comprises partial computations of the DFT. In an example, the first radix kernel arranged to determine the leading bit count in the first output comprises the first radix kernel arranged to count a contiguous number of identical most significant bits which is the same as the sign bit in a signed binary integer of the first output which has a maximum absolute magnitude. In an example, the first output and the second output comprise complex numbers each having components of signed binary integers. In an example, a number of the adaptive left shift is less than or equal to the leading bit count. In an example, a number of the adaptive right shift is less than or equal to a difference between the bit resolution higher than the bit width and the bit width. In an example, the second stage arranged to apply the adaptive right shift comprises a controller arranged to access a lookup table which indicates a number of right shift based on the leading bit count applied to a signed binary integer of the output of the first radix kernel operation. In an example, the second stage arranged to apply the adaptive left shift comprises a controller arranged to access the lookup table which indicates a number of left shift based on the leading bit count applied to a signed binary integer of the output of the first radix kernel operation.

A few implementations have been described in detail above, and various modifications are possible. The disclosed subject matter, including the functional operations described in this specification, can be implemented in electronic circuitry, computer hardware, firmware, software, or in combinations of them, such as the structural means disclosed in this specification and structural equivalents thereof: including potentially a program operable to cause one or more data processing apparatus such as a processor to perform the operations described (such as a program encoded in a non-transitory computer-readable medium, which can be a memory device, a storage device, a machine-readable storage substrate, or other physical, machine readable medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed.

Other implementations fall within the scope of the following claims.

## Claims

1. A method for performing a Fast Fourier Transformation (FFT), the method comprising:

   receiving a first input at a first radix kernel of the FFT comprising signed binary integers, the signed binary integers of the first input each representing a component of a complex number associated with a time domain signal and having a bit width;
   applying a fixed left shift to the signed binary integers of the first input;
   performing a first radix kernel operation on the shifted first input at a bit resolution higher than the bit width;
   applying a fixed right shift to signed binary integers of an output of a butterfly of the first radix kernel operation which are mapped to the bit width to provide a first output of the first stage of the FFT;
   determining a leading bit count of signed binary integers in the first output;
   receiving the first output at a second radix kernel of the FFT which is a second input to the second radix kernel;
   applying an adaptive left shift to signed binary integers of the second input based on the leading bit count;
   performing a second radix kernel operation on the shifted second input at the bit resolution higher than the bit width; and
   applying an adaptive right shift based on the leading bit count to signed binary integers of an output of a butterfly of the second radix kernel operation which are mapped to the bit width to provide a second output of the second stage of the FFT;
   wherein the adaptive left shift and adaptive right shift determines the bit resolution of the FFT.

2. The method of claim 1, further comprising providing an output of one radix kernel to an input of another radix kernel until the first input is transformed into the frequency domain.

3. The method ôf any of claims 1 to 2, wherein determining the leading bit count in the first output comprises counting a contiguous number of most significant bits which is the same as the sign bit in a signed binary integer of the first output which has a maximum absolute magnitude.

4. The method of any of claims 1 to 3, wherein the signed binary integers of the first output and the second output have the bit width.

5. The method of any of claims 1 to 4, wherein the first output and the second output comprise complex numbers each having components of signed binary integers.

6. The method of any of claims 1 to 5, wherein the first input, first output, and second output each comprises two complex numbers and the radix kernel is a radix-2 kernel.

7. A signal processing system for performing a Fast Fourier Transformation (FFT), the system comprising:

   a first stage of the FFT which has a first radix kernel arranged to receive a first input comprising signed binary integers, the signed binary integers of the first input each representing a component of a complex number associated with a time domain signal and having a bit width; apply a fixed left shift to the signed binary integers of the first input; performing a first radix kernel operation on the shifted first input at a bit resolution higher than the bit width; apply a fixed right shift to signed binary integers of an output of a butterfly of the first radix kernel operation which are mapped to the bit width to provide a first output of the first stage of the FFT; and determine a leading bit count of signed binary integers in the first output;

a second stage of the FFT which has a second radix kernel arranged to receive the first output which is a second input to the second radix kernel; apply an adaptive left shift to signed binary integers of the second input based on the leading bit count; perform a second radix kernel operation on the shifted second input at the bit resolution higher than the bit width; and apply an adaptive right shift based on the leading bit count to signed binary integers of an output of a butterfly of the second radix kernel operation which are mapped to the bit width to provide a second output of the second stage of the FFT;

wherein the adaptive left shift and adaptive right shift determines the bit resolution of the FFT.

8. The signal processing system of claim 7, wherein the first radix kernel operation and the second radix kernel operation comprise a Discrete Fourier Transform (DFT).

9. The signal processing system of any of claims 7 to 8, wherein the butterfly comprises partial computations of the DFT.

10. The signal processing system of any of claims 7 to 9, wherein the first radix kernel arranged to determine the leading bit count in the first output comprises the first radix kernel arranged to count a contiguous number of identical most significant bits which is the same as the sign bit in a signed binary integer of the first output which has a maximum absolute magnitude.

11. The signal processing system of any of claims 7 to 10, wherein the first output and the second output comprise complex numbers each having components of signed binary integers.

12. The signal processing system of any of claims 7 to 11, wherein a number of the adaptive left shift is less than or equal to the leading bit count.

13. The signal processing system of any of claim 7 to 11, wherein a number of the adaptive right shift is less than or equal to a difference between the bit resolution higher than the bit width and the bit width.

14. The signal processing system of any of claims 7 to 13, wherein the second stage arranged to apply the adaptive right shift comprises a controller arranged to access a lookup table which indicates a number of right shift based on the leading bit count applied to a signed binary integer of the output of the first radix kernel operation.

15. The signal processing system of any of claims 7 to 13, wherein the second stage arranged to apply the adaptive left shift comprises a controller arranged to access the lookup table which indicates a number of left shift based on the leading bit count applied to a signed binary integer of the output of the first radix kernel operation.

**Patentansprüche**

1. Verfahren zum Durchführen einer schnellen Fourier-Transformation (FFT), wobei das Verfahren Folgendes umfasst:

Empfangen einer ersten Eingabe an einem ersten Radix-Kernel der FFT, die vorzeichenbehaftete binäre Ganzzahlen umfasst, wobei die vorzeichenbehaftete binäre Ganzzahl der ersten Eingabe jeweils eine Komponente einer komplexen Zahl repräsentiert, die mit einem Zeitbereichssignal assoziiert ist und eine Bitbreite aufweist;

Anwenden einer festen Linksverschiebung auf die vorzeichenbehafteten binären Ganzzahlen der ersten Eingabe;

Durchführen einer ersten Radix-Kernel-Operation an der verschobenen ersten Eingabe mit einer Bitauflösung, die höher als die Bitbreite ist;

Anwenden einer festen Rechtsverschiebung auf vorzeichenbehaftete binäre Ganzzahlen einer Ausgabe eines Schmetterlings der ersten Radix-Kernel-Operation, die auf die Bitbreite abgebildet sind, um eine erste Ausgabe der ersten Stufe der FFT bereitzustellen;

Bestimmen einer Anzahl der führenden Bits von vorzeichenbehafteten binären Ganzzahlen in der ersten Ausgabe;

Empfangen der ersten Ausgabe an einem zweiten Radix-Kernel der FFT, der eine zweite Eingabe in den zweiten Radix-Kernel ist;

Anwenden einer adaptiven Linksverschiebung auf vorzeichenbehaftete binäre Ganzzahlen der zweiten Eingabe basierend auf der Anzahl der führenden Bits;

Durchführen einer zweiten Radix-Kernel-Operation an der verschobenen zweiten Eingabe mit der Bitauflösung, die höher als die Bitbreite ist; und

Anwenden einer adaptiven Rechtsverschiebung basierend auf der Anzahl der führenden Bits auf vorzeichenbehaftete binäre Ganzzahlen einer Ausgabe eines Schmetterlings der zweiten Radix-Kernel-Operation, die auf die Bitbreite abgebildet sind, um eine zweite Ausgabe der zweiten Stufe der FFT bereitzustellen;

Wobei die adaptive Linksverschiebung und die adaptive Rechtsverschiebung die Bitauflösung der FFT bestimmen.

2. Verfahren nach Anspruch 1, ferner umfassend Bereitstellen einer Ausgabe eines Radix-Kernels an eine Eingabe eines anderen Radix-Kernels, bis die erste Eingabe in den Frequenzbereich transformiert wird.

3. Verfahren nach einem der Ansprüche 1 bis 2, wobei das Bestimmen der Anzahl der führenden Bits in der ersten Ausgabe das Zählen einer zusammenhängenden Anzahl höchstwertiger Bits umfasst, die gleich dem Vorzeichenbit in einer vorzeichenbehafteten binären Ganzzahl der ersten Ausgabe ist, die eine maximale absolute Größe aufweist.

4. Verfahren nach einem der Ansprüche 1 bis 3, wobei die vorzeichenbehafteten binären Ganzzahlen der ersten Ausgabe und der zweiten Ausgabe die Bitbreite aufweisen.

5. Verfahren nach einem der Ansprüche 1 bis 4, wobei die erste Ausgabe und die zweite Ausgabe komplexe Zahlen umfassen, die jeweils Komponenten vorzeichenbehafteter binärer Ganzzahlen aufweisen.

6. Verfahren nach einem der Ansprüche 1 bis 5, wobei die erste Eingabe, die erste Ausgabe und die zweite Ausgabe jeweils zwei komplexe Zahlen umfassen und der Radix-Kernel ein Radix-2-Kernel ist.

7. Signalverarbeitungssystem zum Durchführen einer schnellen Fourier-Transformation (FFT), wobei das System Folgendes umfasst:

eine erste Stufe der FFT, die einen ersten Radix-Kernel aufweist, der dazu ausgelegt ist, eine erste Eingabe zu empfangen, die vorzeichenbehaftete binäre Ganzzahlen umfasst, wobei die vorzeichenbehafteten binären Ganzzahlen der ersten Eingabe jeweils eine Komponente einer komplexen Zahl repräsentieren, die mit einem Zeitbereichssignal assoziiert ist und eine Bitbreite aufweist; eine feste linke Verschiebung auf die vorzeichenbehafteten binären Ganzzahlen der ersten Eingabe anzuwenden; eine erste Radix-Kernel-Operation an der verschobenen ersten Eingabe mit einer Bitauflösung durchzuführen, die höher als die Bitbreite ist; eine feste Rechtsverschiebung auf vorzeichenbehaftete binäre Ganzzahlen einer Ausgabe eines Schmetterlings der ersten Radix-Kernel-Operation anzuwenden, die auf die Bitbreite abgebildet sind, um eine erste Ausgabe der ersten Stufe der FFT bereitzustellen; und eine Anzahl führender Bits vorzeichenbehafteter binärer Ganzzahlen in der ersten Ausgabe zu bestimmen;

eine zweite Stufe der FFT, die einen zweiten Radix-Kernel aufweist, der dazu ausgelegt ist, die erste Ausgabe zu empfangen, die eine zweite Eingabe in den zweiten Radix-Kernel ist; eine adaptive Linksverschiebung auf vorzeichenbehaftete binäre Ganzzahlen der zweiten Eingabe basierend auf der Anzahl der führenden Bits anzuwenden; eine zweite Radix-Kernel-Operation an der verschobenen zweiten Eingabe mit der Bitauflösung durchzuführen, die höher als die Bitbreite ist; und eine adaptive Rechtsverschiebung basierend auf der Anzahl der führenden Bits auf vorzeichenbehaftete binäre Ganzzahlen einer Ausgabe eines Schmetterlings der zweiten Radix-Kernel-Operation anzuwenden, die auf die Bitbreite abgebildet sind, um eine zweite Ausgabe der zweiten Stufe der FFT bereitzustellen;

Wobei die adaptive Linksverschiebung und die adaptive Rechtsverschiebung die Bitauflösung der FFT bestimmen.

8. Signalverarbeitungssystem nach Anspruch 7, wobei die erste Radix-Kernel-Operation und die zweite Radix-Kernel-Operation eine diskrete Fourier-Transformation (DFT) umfassen.

9. Signalverarbeitungssystem nach einem der Ansprüche 7 bis 8, wobei der Schmetterling Teilberechnungen der DFT umfasst.

10. Signalverarbeitungssystem nach einem der Ansprüche 7 bis 9, wobei der erste Radix-Kernel, der zum Bestimmen der Anzahl der führenden Bits in der ersten Ausgabe ausgelegt ist, den ersten Radix-Kernel umfasst, der zum Zählen einer zusammenhängenden Anzahl identischer höchstwertiger Bits ausgelegt ist, die gleich dem Vorzeichenbit in einer vorzeichenbehafteten binären Ganzzahl der ersten Ausgabe ist, die eine maximale absolute Größe aufweist.

11. Signalverarbeitungssystem nach einem der Ansprüche 7 bis 10, wobei die erste Ausgabe und die zweite Ausgabe komplexe Zahlen umfassen, die jeweils Komponenten vorzeichenbehafteter binärer Ganzzahlen aufweisen.

12. Signalverarbeitungssystem nach einem der Ansprüche 7 bis 11, wobei eine Anzahl der adaptiven Linksverschiebungen kleiner oder gleich der Anzahl der führenden Bits ist.

13. Signalverarbeitungssystem nach einem der Ansprüche 7 bis 11, wobei eine Anzahl der adaptiven Rechtsverschiebungen kleiner oder gleich einer Differenz zwischen der Bitauflösung, die höher als die Bitbreite ist, und der Bitbreite ist.

14. Signalverarbeitungssystem nach einem der Ansprüche 7 bis 13, wobei die zweite Stufe, die zum Anwenden der adaptiven Rechtsverschiebung ausgelegt ist, eine Steuervorrichtung umfasst, die zum Zugreifen auf eine Nachschlagetabelle ausgelegt ist, die eine Anzahl von Rechtsverschiebungen basierend auf der Anzahl der führenden Bits angibt, die auf eine vorzeichenbehaftete binäre Ganzzahl der Ausgabe der ersten Radix-Kernel-Operation angewendet wird.

15. Signalverarbeitungssystem nach einem der Ansprüche 7 bis 13, wobei die zweite Stufe, die zum Anwenden der adaptiven Linksverschiebung ausgelegt ist, eine Steuervorrichtung umfasst, die zum Zugreifen auf die Nachschlagetabelle ausgelegt ist, die eine Anzahl von Linksverschiebungen basierend auf der Anzahl der führenden Bits angibt, die auf eine vorzeichenbehaftete binäre Ganzzahl der Ausgabe der ersten Radix-Kernel-Operation angewendet wird.

**Revendications**

1. Procédé pour réaliser une transformée de Fourier rapide (« Fast Fourier Transformation », FFT), le procédé comprenant :

la réception d'une première entrée à un premier noyau de base de la FFT comprenant des nombres entiers binaires signés, les nombres entiers binaires signés de la première entrée représentant chacun un composant d'un nombre complexe associé à un signal de domaine temporel et ayant une largeur de bit ;
l'application d'un décalage à gauche fixe aux nombres entiers binaires signés de la première entrée ;
la réalisation d'une première opération de noyau de base sur la première entrée décalée à une résolution de bit plus élevée que la largeur de bit ;
l'application d'un décalage à droite fixe à des nombres entiers binaires signés d'une sortie d'un papillon de la première opération de noyau de base qui sont mappés sur la largeur de bit pour fournir une première sortie du premier niveau de la FFT ;
la détermination d'un compte de bits de tête de nombres entiers binaires signés dans la première sortie ;
la réception de la première sortie à un second noyau de base de la FFT qui est une seconde entrée dans le second noyau de base ;
l'application d'un décalage à gauche adaptatif à des nombres entiers binaires signés de la seconde entrée sur la base du compte de bits de tête ;
la réalisation d'une seconde opération de noyau de base sur la seconde entrée décalée à la résolution de bit plus élevée que la largeur de bit ; et
l'application d'un décalage à droite adaptatif sur la base du compte de bits de tête à des nombres entiers binaires signés d'une sortie d'un papillon de la seconde opération de noyau de base qui sont mappés sur la largeur de bit pour fournir une seconde sortie du second niveau de la FFT ;
dans lequel le décalage à gauche adaptatif et le décalage à droite adaptatif déterminent la résolution de bit de la FFT.

2. Procédé de la revendication 1, comprenant en outre la fourniture d'une sortie d'un noyau de base à une entrée d'un autre noyau de base jusqu'à ce que la première entrée soit transformée en le domaine fréquentiel.

3. Procédé de quelconques des revendications 1 et 2, dans lequel la détermination du compte de bits de tête dans la première sortie comprend le comptage d'un nombre contigu de bits les plus significatifs qui est le même que le bit de signe dans un nombre entier binaire signé de la première sortie qui a une amplitude absolue maximum.

4. Procédé de quelconques des revendications 1 à 3, dans lequel les nombres entiers binaires signés de la première sortie et de la seconde sortie ont la largeur de bit.

5. Procédé de quelconques des revendications 1 à 4, dans lequel la première sortie et la seconde sortie comprennent des nombres complexes ayant chacun des composants de nombres entiers binaires signés.

6. Procédé de quelconques des revendications 1 à 5, dans lequel la première entrée, la première sortie, et la seconde sortie comprennent chacune deux nombres complexes et le noyau de base est un noyau de base 2.

7. Système de traitement de signal pour réaliser une transformée de Fourier rapide (« Fast Fourier Transformation », FFT), le système comprenant :

un premier niveau de la FFT qui a un premier noyau de base agencé pour recevoir une première entrée comprenant des nombres entiers binaires signés, les nombres entiers binaires signés de la première entrée représentant chacun un composant d'un nombre complexe associé à un signal de domaine temporel et ayant une largeur de bit ; appliquer un décalage à gauche fixe aux nombres entiers binaires signés de la première entrée ; réaliser une première opération de noyau de base sur la première entrée décalée à une résolution de bit plus élevée que la largeur de bit ; appliquer un décalage à droite fixe à des nombres entiers binaires signés d'une sortie d'un papillon de la première opération de noyau de base qui sont mappés sur la largeur de bit pour fournir une première sortie du premier niveau de la FFT ; et déterminer un compte de bits de tête de nombres entiers binaires signés dans la première sortie ;
un second niveau de la FFT qui a un second noyau de base agencé pour recevoir la première sortie qui est une seconde entrée dans le second noyau de base ; appliquer un décalage à gauche adaptatif à des nombres entiers binaires signés de la seconde entrée sur la base du compte de bits de tête ; réaliser une seconde opération de noyau de base sur la seconde entrée décalée à la résolution de bit plus élevée que la largeur de bit ; et appliquer un décalage à droite adaptatif sur la base du compte de bits de tête à des nombres entiers binaires signés d'une sortie d'un papillon de la seconde opération de noyau de base qui sont mappés sur la largeur de bit pour fournir une seconde sortie du second niveau de la FFT ;
dans lequel le décalage à gauche adaptatif et le décalage à droite adaptatif déterminent la résolution de bit de la FFT.

8. Système de traitement de signal de la revendication 7, dans lequel la première opération de noyau de base et la seconde opération de noyau de base comprennent une transformée de Fourier discrète («Discrete Fourier Transform», DFT).

9. Système de traitement de signal de quelconques des revendications 7 à 8, dans lequel le papillon comprend des calculs partiels de la DFT.

10. Système de traitement de signal de quelconques des revendications 7 à 9, dans lequel le premier noyau de base agencé pour déterminer le compte de bits de tête dans la première sortie comprend le premier noyau de base agencé pour compter un nombre contigu de bits les plus significatifs identiques qui est le même que le bit de signe dans un nombre entier binaire signé de la première sortie qui a une amplitude absolue maximum.

11. Système de traitement de signal de quelconques des revendications 7 à 10, dans lequel la première sortie et la seconde sortie comprennent des nombres complexes ayant chacun des composants de nombres entiers binaires signés.

12. Système de traitement de signal de quelconques des revendications 7 à 11, dans lequel un nombre des décalages à gauche adaptatifs est inférieur ou égal au compte de bits de tête.

13. Système de traitement de signal de quelconques des revendications 7 à 11, dans lequel un nombre des décalages à droite adaptatifs est inférieur ou égal à une différence entre la résolution de bit plus élevée que la largeur de bit et la largeur de bit.

14. Système de traitement de signal de quelconques des revendications 7 à 13, dans lequel le second niveau agencé pour appliquer le décalage à droite adaptatif comprend un contrôleur agencé pour accéder à une table de consultation qui indique un nombre de décalages à droite sur la base du compte de bits de tête appliqué à un nombre entier binaire signé de la sortie de la première opération de noyau de base.

15. Système de traitement de signal de quelconques des revendications 7 à 13, dans lequel le second niveau agencé pour appliquer le décalage à gauche adaptatif comprend un contrôleur agencé pour accéder à la table de consultation qui indique un nombre de décalages à gauche sur la base du compte de bits de tête appliqué à un nombre entier binaire signé de la sortie de la première opération de noyau de base.

FIG. 1

FIG. 2

FIG. 3

FIG. 4

FIG. 5

FIG. 6

EP 4 296 847 B1

EP 4 296 847 B1

700

| INPUT:<br>LEADING BITS COUNT<br>CLB (IN BITS) | INPUT<br>LEFT SHIFT inLSH<br>(IN BITS) | OUTPUT<br>ROUNDED RIGHT<br>SHIFT outRSH<br>(IN BITS) | TOTAL SHIFT AFTER<br>RADIX4 STAGE |
|:---:|:---:|:---:|:---:|
| 0 | 0 | 4 | 0 |
| 1 | 0 | 3 | 1 |
| 2 | 0 | 2 | 2 |
| 3 | 0 | 1 | 3 |
| 4 | 0 | 0 | 4 |
| 5 | 1 | 0 | 5 |
| 6 | 2 | 0 | 6 |
| 7 | 3 | 0 | 7 |
| >= 8 | 4 | 0 | 8 |

FIG. 7A

702

| INPUT: LEADING BITS COUNT CLB (IN BITS) | INPUT LEFT SHIFT inLSH (IN BITS) | OUTPUT ROUNDED RIGHT SHIFT outRSH (IN BITS) | TOTAL SHIFT AFTER RADIX2 STAGE |
|---|---|---|---|
| 0 | 0 | 3 | 0 |
| 1 | 0 | 2 | 1 |
| 2 | 0 | 1 | 2 |
| 3 | 0 | 0 | 3 |
| 4 | 1 | 0 | 4 |
| 5 | 2 | 0 | 5 |
| 6 | 3 | 0 | 6 |
| >=7 | 4 | 0 | 7 |

FIG. 7B

| INPUT:<br>LEADING BITS COUNT<br>CLB (IN BITS) | INPUT<br>LEFT SHIFT inLSH<br>(IN BITS) | OUTPUT<br>ROUNDED RIGHT<br>SHIFT outRSH<br>(IN BITS) | TOTAL SHIFT AFTER<br>RADIX4 STAGE |
|:---:|:---:|:---:|:---:|
| 0, 1 | 0 | 4 | 0 |
| 2 | 0 | 3 | 1 |
| 3 | 0 | 2 | 2 |
| 4 | 0 | 1 | 3 |
| 5 | 0 | 0 | 4 |
| 6 | 1 | 0 | 5 |
| 7 | 2 | 0 | 6 |
| 8 | 3 | 0 | 7 |
| >= 8 | 4 | 0 | 8 |

FIG. 7C

EP 4 296 847 B1

706

| INPUT: LEADING BITS COUNT CLB (IN BITS) | INPUT LEFT SHIFT inLSH (IN BITS) | OUTPUT ROUNDED RIGHT SHIFT outRSH (IN BITS) | TOTAL SHIFT AFTER RADIX2 STAGE |
|---|---|---|---|
| 0, 1 | 0 | 3 | 0 |
| 2 | 0 | 2 | 1 |
| 3 | 0 | 1 | 2 |
| 4 | 0 | 0 | 3 |
| 5 | 1 | 0 | 4 |
| 6 | 2 | 0 | 5 |
| 7 | 3 | 0 | 6 |
| > = 8 | 4 | 0 | 7 |

FIG. 7D

EP 4 296 847 B1

800

24
BITS → | RADIX STAGE 1 | → • 13 LEADING BITS
• ACCUMULATED SHIFT = 0

802

| RADIX STAGE 2 | → • 5 LEADING BITS
• ACCUMULATED SHIFT = 8

804

| RADIX STAGE 3 | → • 0 LEADING BITS
• ACCUMULATED SHIFT = 13

806

FIG. 8

First Radix Stage

```
          ┌──────────────┐
          │    Start     │
          └──────┬───────┘
                 │
                 ▼
      ┌────────────────────┐ ── 902
      │ Fixed left shift of│
      │       input        │
      └─────────┬──────────┘
                │
                ▼
      ┌────────────────────┐ ── 904
      │ Execute twiddle    │
      │ factor multiplier  │
      │ on left shifted    │
      │ input followed by  │
      │     butterfly      │
      └─────────┬──────────┘
                │
                ▼
      ┌────────────────────┐ ── 906
      │ Fixed right shift  │
      │ of output of       │
      │     butterfly      │
      └─────────┬──────────┘
                │
                ▼
      ┌────────────────────┐ ── 908
      │ Map right shifted  │
      │ output to bit width│
      └─────────┬──────────┘
                │
                ▼
      ┌────────────────────┐ ── 910
      │ Count leading bits │
      │ in mapped output of│
      │    first stage     │
      └─────────┬──────────┘
                │
                ▼
            ┌───────┐
            │   A   │
            └───────┘
```

FIG. 9A

A

Determine adaptive left
shift and adaptive right
shift based on count of
leading bits — 912

Apply adaptive left shift
to signed binary
integers output by a
previous radix stage
now input to a current
radix stage — 914

Execute twiddle factor
multiplier to adaptive
left shifted input
followed by butterfly — 916

Apply adaptive right
shift to output of
butterfly — 918

Map shifted output of
butterfly to bit width — 920

Count leading bits in
mapped output — 922

Subsequent Radix Stages

More stages?
922

Yes

No → End

FIG. 9B

**EP 4 296 847 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6081821 A